# EUROPEAN PATENT SPECIFICATION

(11) **EP 1 236 193 B1**
(45) Date of publication and mention of the grant of the patent: **20.08.2003**
(21) Application number: 00969675.8
(22) Date of filing: 18.10.2000
(51) Int. Cl.: G09F 3/20

(54) **PLANT-POT LABELLING SYSTEMS**
BLUMENTOPFETIKETTIERUNGSSYSTEM
SYSTEMES D'ETIQUETAGE DE POT DE PLANTE

(30) Priority: 19.10.1999 GB 9924702; 28.02.2000 GB 0004595
(43) Date of publication of application: 04.09.2002
(73) Proprietor: Synprodo Plantpak Limited, Maldon, Essex CM9 6NT (GB)
(72) Inventor: BROUGH, Dennis Michael, Congleton Cheshire CW12 4NP (GB)
(74) Representative: Gillam, Francis Cyril
(86) International application number: GB0003988
(87) International publication number: WO01029806

(56) References cited:
- WO-A-93/17412
- WO-A-93/19446
- AU-A- 620 016
- GB-A- 2 304 677

## Description

This invention relates to a container labelling system, and also both to a container and, separately, to a label, each adapted for use in such a labelling system.

The invention finds particular application to the labelling of plant-pots and other plant-growing containers, and the invention will consequently be described hereinafter exclusively with reference to that application. It will however be understood that the invention is not to be regarded as limited to that use and may be employed in the labelling of containers intended to hold other items or objects besides plants. The term plant-pot or simply pot as used herein should consequently be construed very broadly, to cover these other kinds of containers.

The satisfactory labelling of plant-pots has become increasingly important with self-service nurseries. Customers wish to be sure that they are buying the plant that they think they are buying after considering the label. Often, specialist help is not available to confirm that a plant truly is what the label says it is. Thus, it is most important that a label associated with a plant growing in a pot and placed there by the original nursery remains securely associated with that plant until the plant is sold, at the retail level.

Experience shows that plant-pot labels can inadvertently be detached from a pot by a variety of causes. Handling of the pots both prior to and during transit from a grower to a retail outlet can dislodge a label, as can subsequent handling in a retail outlet, either by the staff or prospective purchasers. Further, a loosened label can even be dislodged by wind or rain. The consequence is that perhaps as many as 40% or so of labels originally attached by a grower no longer are present by the time a plant is placed on sale at a retail outlet.

The secure labelling of plants is also important for another reason: it is not uncommon for dishonest people to switch the labels of plants offered for sale in a self-service nursery, so that they may present to a checkout till a relatively expensive plant but carrying the label of a relatively cheap plant. The cashier at the till very often does not have sufficient expertise to know that such a switch has occurred.

In an attempt to address the above issues, there have been various proposals to ensure that a label associated with a growing plant in a plant-pot and applied by the original growing nursery cannot easily be removed from the pot. These proposals aim at overcoming both the problem of accidental dislodgement of the label through handling of the plant-pot and also deliberate dislodgement, to exchange that label with another of a cheaper variety. However, the most secure proposals are relatively expensive to implement at the manufacturing stage of the plant-pots or labels, and so have not been widely adopted. On the other hand, those cheaper proposals which have been adopted lend little security against deliberate exchanging of labels, though they may assist with the problem of accidental dislodgement, caused for example through handling of the pots either by nursery staff or by potential purchasers.

An example of a labelling technique is to be found in GB-2257109A. Here, a plant-pot is provided with a series of slots around its upper periphery and a hanging label has an enlarged head on a mounting leg, such that when the head is pushed through one of the slots, the label is retained therein. However, this arrangement only allows a label to hang downwardly from the slot, to lie alongside the side wall of the pot. In effect, therefore, only one face of the label can carry useful information and further, since the main area of the label cannot up-stand from the pot, it does not in general add to the sales appeal of the plant growing in the pot.

WO-A-93 19446 discloses a container which has a side wall defining a mouth with a rim region therearound, which rim region has a pair of opposed wall portions defining a slot with a barb-like projection projecting across the slot from one opposed wall portion. Moreover, WO-A-93 19446 discloses an information label which comprises a main information-carrying area, a flexible mounting leg projecting from said area and there being an aperture formed through the mounting leg of the label.

It is a principal aim of the present invention to provide a container labelling system suitable for the labelling of plant-pots and which is relatively simple to implement during the manufacturing stage of both the containers and the labels, whilst offering a reasonably high degree of security, once a label has been attached to a container.

According to one aspect of the present invention, there is provided a container labelling system suitable for use with a plant pot, wherein the label is formed from a flexible substantially planar sheet material to have a main information-carrying area from which projects a mounting leg having an aperture formed therethrough, and wherein the container has a mouth with a rim region therearound which rim region has an elongate slot defined by a pair of opposed container wall portions for receiving the mounting leg of the label, one of said opposed wall portions carrying a barb-like projection formed to project across the slot and the other of said opposed wall portions carrying a pair of ribs also formed to project across the slot with one to each side of said barb-like projection, whereby insertion of the leg into the slot deforms the leg around the barb-like projection until said projection engages into the aperture in the leg of a label pressed sufficiently far into the slot, the engagement thereafter being maintained by the ribs such that the barb resists withdrawal of the leg from the slot.

It will be appreciated that the label for use in the system of this invention may be essentially conventional, and so correspond to a typical label which is simply pressed into the growing medium in a plant pot, except that the leg of the label has an aperture formed therethrough. Equally, the container may also be essentially conventional and generally correspond to plant-pots or other growing containers which are widely used by nurseries and retail outlets, except that the container has a slot moulded into its rim, which slot has a barb-like projection extending thereacross from one side and a pair of ribs extending thereacross from the other side, with one rib to each side of the barb. In view of the barb-like form of the projection, the leg of the label may be pressed relatively easily into the slot, with the leg of the label deflecting as necessary by virtue of the presence of the ribs, until the projection is received in the aperture. The ribs serve to push the label deeper into engagement with the barb, which action is assisted by the label tending to spring back to its original shape. It will thus be very difficult to remove the label without destroying either the leg of the label or the rim portion of the container. Of course, with sufficient ingenuity and perhaps with a suitable levering tool it would be possible to remove a label, but such activity is likely to be noticed in a retail outlet and in any event the labelling system will solve the accidental dislodgement problem in a satisfactory manner.

Most preferably, the mounting leg has side edges which taper towards each other, away from the main area of the label. At least one side edge, but preferably both side edges, may be provided with a step adjacent the main area of the label, the or each step being engageable beneath the rim portion of the container when the label is pressed sufficiently far into the slot - and advantageously such engagement should take place simultaneously with the barb-like projection being received in the aperture in the leg. The maximum width of the leg, across the steps, may be slightly greater than the length of the slot, so that the leg of the label in the region of the steps must deform slightly as the label is pressed home. Such an arrangement gives even greater security and makes it yet more difficult deliberately to remove a label from a slot in a container rim, as well as helping to hold the label in a generally upright position.

Each rib preferably projects by an increasing amount from its associated wall, in the direction of insertion of a label leg. This assists the insertion of a label without detracting from the label leg deforming function of the rib.

The container advantageously comprises a plastics material moulding, the barb-like projection being moulded integrally with the side wall of the container, and the ribs being moulded integrally with the opposed wall defining the slot. Both the projection and also the aperture through the leg of the label may be of generally rectangular configuration, so as to give a secure, high-strength connection between the label and the container.

Depending upon the container design, the slot may have either a generally linear form, for rectangular containers, or may be arcuate and follow the radius of curvature of the mouth of the container. In either case, the barb-like projection preferably is disposed substantially centrally of the length of the slot, with the ribs disposed symmetrically to each side thereof.

This invention extends to a container for use in a container labelling system of this invention as described above, which container has a side wall defining a mouth with a rim region therearound. The rim region has a pair of opposed wall portions defining a slot with a barb-like projection projecting across the slot from one opposed wall portion and a pair of ribs projecting across the slot from the other wall portion with the ribs disposed one to each side of the barb-like projection, whereby on pushing a label having a main information-carrying area, a flexible planar mounting leg projecting from said area with an aperture formed therein, the ribs will deform the leg around the barb-like projection until said projection engages in the aperture, whereafter the ribs will maintain the engagement to resist withdrawal of the leg from the slot.

Further, this invention extends to an information label for use with a container as defined above, which label comprises a main information-carrying area, a flexible planar mounting leg projecting from said area and there being an aperture formed through the mounting leg of the label, whereby on pushing a label leg into the slot, the ribs will deform the leg around the barb-like projection until said projection engages in the aperture, whereafter the ribs will maintain the engagement to resist withdrawal of the leg from the slot.

This invention extends to an information label specifically adapted for use in conjunction with a container labelling system of this invention as described above. The invention further extends to a container having a rim portion around its mouth and a slot formed through that rim portion together with a barb-like projection extending across the slot, for use with such a label in a container labelling system of this invention.

By way of example only, one specific embodiment of labelling system of this invention will now be described in detailed, reference being made to the accompanying drawings, in which:-
Figure 1 is a perspective view of a plant-pot moulded for use with the labelling system;
Figure 2 is a plan view on an enlarged scale of a part of the rim region of the plant-pot of Figure 1;
Figure 3 is a side view of a label, shown on a reduced scale, for use in the labelling system;
Figure 4 is an isometric view on part of the leg of the label of Figure 3;
Figures 5 and 6 shown the insertion of a label into the slot of the plant-pot of Figures 1 and 2;
Figure 7 is an enlarged view, partly cut-away, of a label leg engaged with the slot of the plant-pot of Figures 1 and 2;
Figure 8 is a isometric view on a modified label leg;
Figure 9 is a detail view showing a modified barb; and
Figure 10 is similar to Figure 7, but showing the label leg of Figure 8 engaged with a slot including a modified barb of Figure 9.

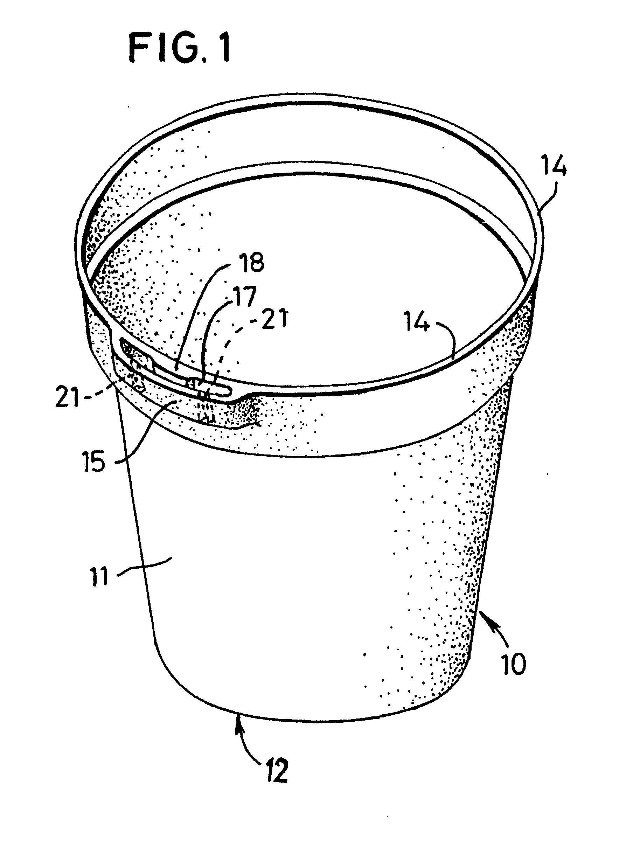

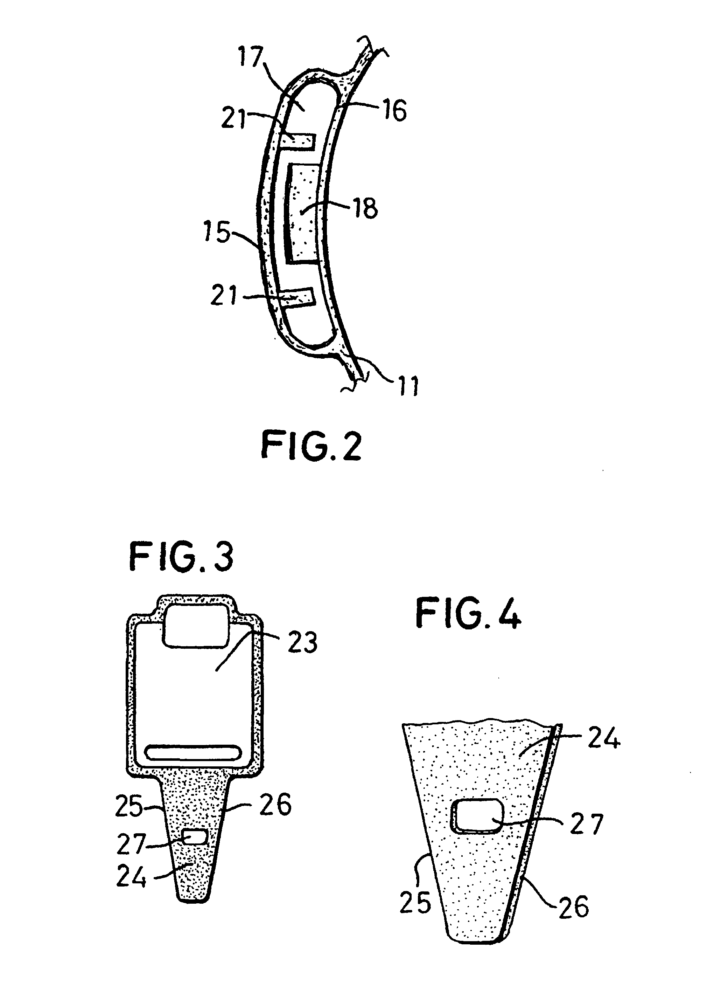

Figures 1 and 2 show an essentially conventional injection-moulded plastics material plant-pot 10, but modified so as to be suitable for use with the container labelling system of this invention. The pot 10 is of circular cross-sectional shape defined by a side wall 11 upstanding from a base 12, typically provided with drainage holes (not shown). Moulded around the upper edge of the side wall 11 is an outwardly projecting flange 14, so defining a rim region of the pot, surrounding the pot mouth.

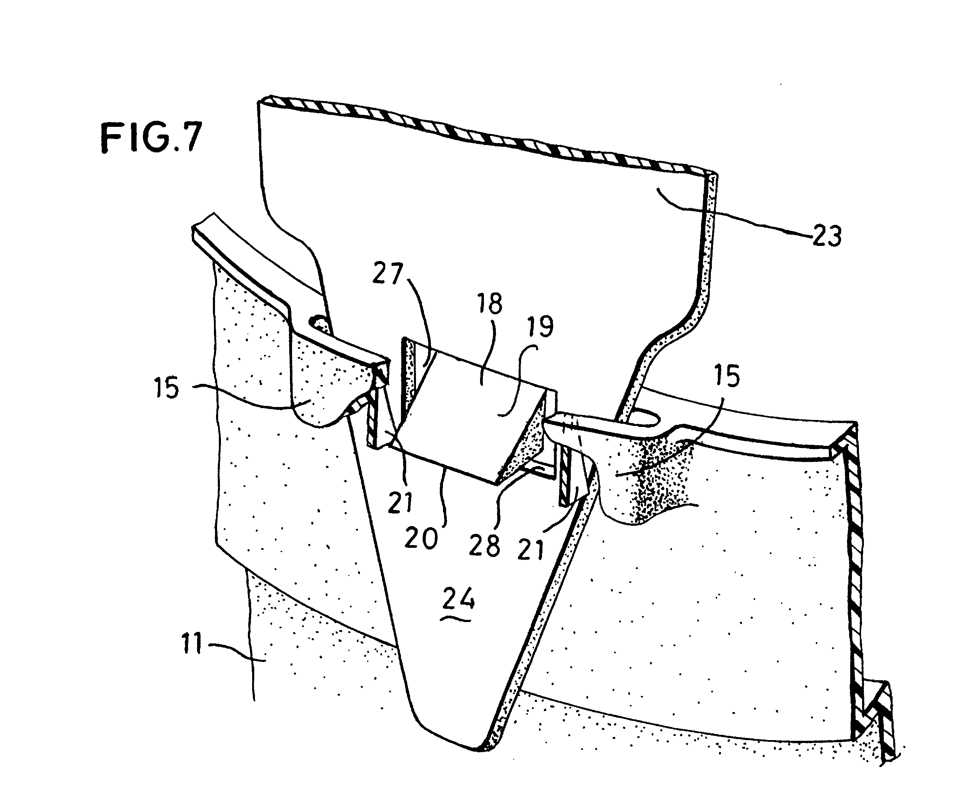

Moulded integrally with the pot 10 is an arcuate wall portion 15, to lie externally of and parallel to a portion 16 of the upper part of the pot side wall 11, in the region of the mouth, for a part of the circumference of the side wall. That wall portion 15 and the opposed pot wall portion 16 together form an arcuate slot 17, for receiving a label. Moulded so as to project from the pot wall portion 16 towards the opposed wall portion 15 is a barb 18 having a tapered upper face 19 and a lower face 20 extending essentially parallel to the base 12 of the pot. A pair of ribs 21 are moulded integrally with the wall portion 15 so as to project towards the opposed pot wall portion 16, with one rib on each side of the barb 18. The amount by which each rib 21 projects towards the opposed pot wall portion 16 increases, from the upper end of the slot 17 down towards the lower end of the slot, as best seen in Figure 7.

Figures 3 and 4 show a typical label for use with the plant-pot of Figures 1 and 2, which label has a main information-carrying area 23 from which projects a mounting leg 24. The mounting leg has side edges 25,26 which taper towards each other, away from the main area 23. A generally rectangular aperture 27 is formed through the mounting leg, centrally of that leg. Though the main area 23 has been shown in Figure 3 as having an attractive shape for carrying plant labelling information, it will be appreciated that the main area may have any desired shape. Such a label should be of sheet plastics material so as to have sufficient strength and flexibility for its intended use.

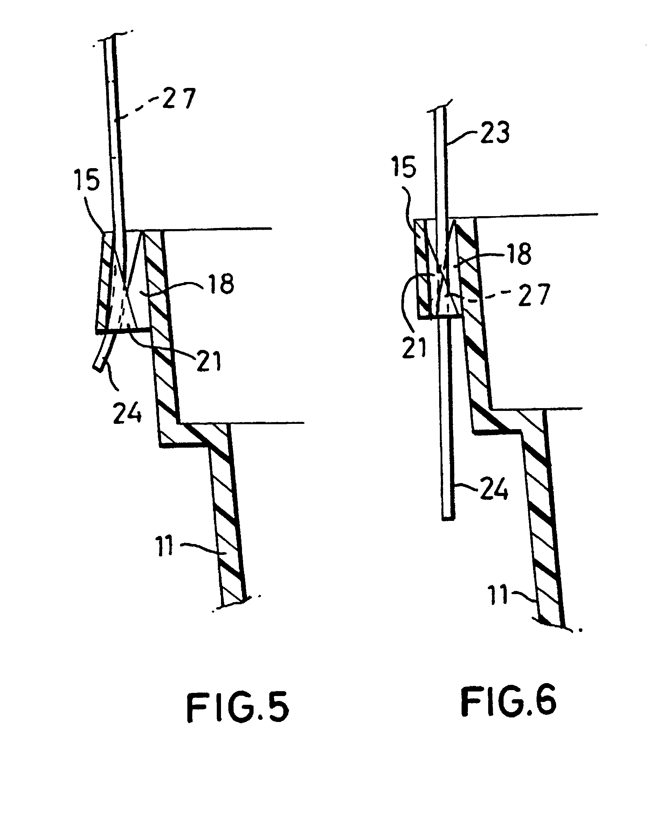

Figures 5 and 6 show the two stages of inserting the mounting leg 24 of the label of Figures 3 and 4 into the slot 17 of the plant-pot of Figures 1 and 2. As can be seen from Figure 5, the leg 24 of the label is deflected outwardly by the upper face 19 of the barb 18 during the first stage of the insertion of the leg into the slot. At the same time, the ribs 21 deflect the lateral parts of the leg inwardly towards the side wall of the pot, so forcing the leg of the label to take up a transversely curved profile. Then, when the label leg 24 has been sufficiently inserted to bring the aperture 27 into register with the barb 18 (as shown in Figures 6 and 7), the leg of the label tends to spring flat so causing the barb to project through the aperture. Thus, the lower face 20 of the barb engages the lower edge 28 of the aperture 27 and is maintained in that position by the ribs 21 bearing on the leg, to each side of the aperture 27. In this way, the label is held in the slot by the barb; removal of the label is possible only by prising the lower part of the leg over the barb, against the action of the ribs 21, or by destroying one (or both) of the label leg and the wall portion 15 defining the slot 17.

The width across that part of the mounting leg 24 of the label which lies substantially on the plane of the lower face 20 of the barb 18, when engaged with the aperture 27, should be approximately equal to the length of the slot 17. Thus, when the label is secured to the plant-pot, the inter-engagement of the side edges 25,26 with the ends of the slot 17 will serve to hold the label substantially in an upright position.

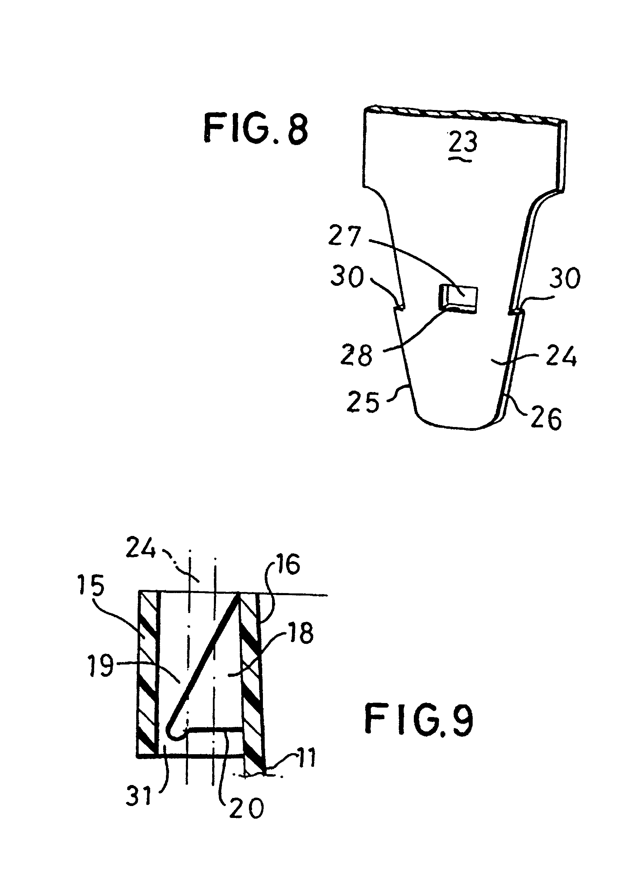

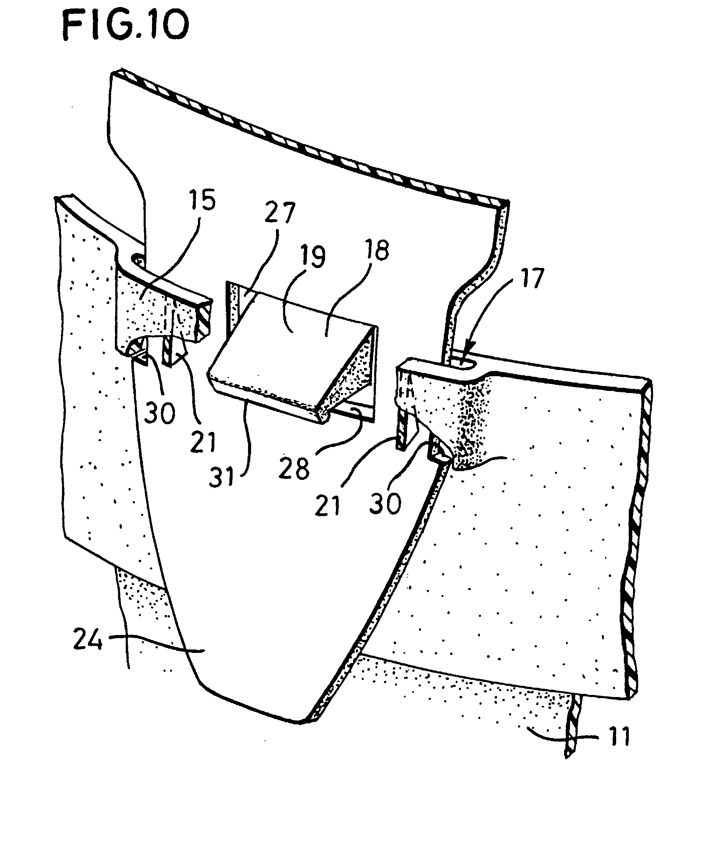

Figure 8 shows a modified form of label leg, wherein there is provided in each side edge 25,26 a step 30, substantially on the same level as the lower edge 28 of the aperture 27 through the leg. The maximum width of the leg at the steps is arranged to be slightly greater than the length of the slot 17 with which the label is to be used, so that insertion of the leg 24 into a slot to engage the barb in the aperture will also engage the steps 30 behind the rim portion of the pot, as shown in Figure 10. This requires the label leg to be deformed slightly, across its width. However, once the barb has engaged in the aperture of the label leg, that leg may return to its original shape and the steps 30 serve further to add security to the retention of the label, to the plant-pot.

As can be seen in Figures 9 and 10, the lower face 20 of the barb 18 is provided with a lip 31 at its outer edge, behind which the lower edge 28 of the aperture is trapped, once the barb has projected therethrough. This lip increases the security of the attachment of the label leg to the container and further resists withdrawal of a label.

## Claims

1. A container labelling system suitable for use with a plant pot (10), wherein the label is formed from a flexible substantially planar sheet material to have a main information-carrying area (23) from which projects a mounting leg (24) having an aperture (27) formed therethrough, and wherein the container (10) has a mouth with a rim region (14) therearound which rim region has an elongate slot (17) defined by a pair of opposed container wall portions (15,16) for receiving the mounting leg (24) of the label, one of said opposed wall portions (15,16) carrying a barb-like projection (18) formed to project across the slot and the other of said opposed wall portions carrying a pair of ribs (21) also formed to project across the slot with one to each side of said barb-like projection (18), whereby insertion of the leg into the slot deforms the leg around the barb-like projection until said projection engages into the aperture in the leg of a label pressed sufficiently far into the slot, the engagement thereafter being maintained by the ribs such that the barb resists withdrawal of the leg from the slot.

2. A container labelling system as claimed in claim 1, wherein the mounting leg has side edges which taper towards each other, away from the main area of the label.

3. A container labelling system as claimed in claim 1 or claim 2, wherein the aperture through the label leg is of generally rectangular form.

4. , A container labelling system as claimed in any of the preceding claims, wherein the container comprises a plastics material moulding and the barb-like projection is moulded integrally with the container.

5. A container labelling system as claimed in any of the preceding claims, wherein the barb-like projection is formed immediately below the level of the open mouth of the container.

6. A container labelling system as claimed in any of the preceding claims, wherein the slot has a generally linear form.

7. A container labelling system as claimed in any of claims 1 to 5, wherein the slot is arcuate and follows the radius of curvature of the mouth of the container.

8. A container labelling system as claimed in any of the preceding claims, wherein the barb-like projection is disposed substantially centrally of the length of the slot.

9. A container labelling system as claimed in any of the preceding claims, wherein the barb-like projection is formed integrally with a wall portion of the container immediately adjacent the mouth thereof to project generally outwardly across the slot.

10. A container labelling system as claimed in any of the preceding claims, wherein a downwardly depending lip is provided at the free end of the barb-like projection to resist removal of a label once engaged with the projection.

11. A container labelling system as claimed in any of the preceding claims, wherein at least one of the side edges of the mounting leg of the label are provided with a step adjacent the main area of the label, which step is engageable beneath the rim portion of the container when the label is pressed sufficiently far into the slot.

12. A container for use in a container labelling system according to any of claims 1 to 11, which container has a side wall defining a mouth with a rim region therearound, which rim region has a pair of opposed wall portions defining a slot with a barb-like projection projecting across the slot from one opposed wall portion and a pair of ribs projecting across the slot from the other wall portion with the ribs disposed one to each side of the barb-like projection, whereby on pushing a label having a main information-carrying area, a flexible planar mounting leg projecting from said area with an aperture formed therein, the ribs will deform the leg around the barb-like projection until said projection engages in the aperture, whereafter the ribs will maintain the engagement to resist withdrawal of the leg from the slot.

13. A container as claimed in claim 12 and in the form of a moulded plastics material plant-pot.

14. An information label for use with a container having a mouth with a rim region therearound, which rim region has a pair of opposed wall portions defining a slot with a barb-like projection projecting across the slot from one opposed wall portion and a pair of ribs projecting across the slot from the other wall portion with one rib disposed one to each side of the barb-like projection, which label comprises a main information-carrying area, a flexible planar mounting leg projecting from said area and there being an aperture formed through the mounting leg of the label, whereby on pushing a label leg into the slot, the ribs will deform the leg around the barb-like projection until said projection engages in the aperture, whereafter the ribs will maintain the engagement to resist withdrawal of the leg from the slot.

15. A label as claimed in claim 14, wherein the leg has side edges which taper towards each other, away from the main area of the label.

16. A label as claimed in claim 15, wherein a step is formed in at least one side edge of the leg of the label, which step may engage behind the rim portion of a container when the label leg is inserted sufficiently far into the slot of a container.

17. A label as claimed in any of claims 14 to 16, wherein the label is formed from sheet plastics material.

## Patentansprüche

1. Behälter-Etikettierungssystem, das zur Verwendung mit einem Blumentopf (10) geeignet ist, wobei das Etikett aus einem flexiblen, im wesentlichen planaren Bogenmaterial gebildet ist und einen mit Informationen versehenen Hauptbereich (23) hat, von dem ein Befestigungsschenkel (24) mit einem dadurch geformten Loch (27) vorsteht, und wobei der Behälter (10) eine Öffnung mit einem um diese herum verlaufenden Randbereich (14) aufweist, wobei der Randbereich mit einem länglichen Schlitz (17) versehen ist, der durch ein Paar gegenüberliegende Behälter-Wandbereiche (15, 16) gebildet ist, um den Befestigungsschenkel (24) des Etiketts aufzunehmen, wobei einer der gegenüberliegenden Wandbereiche (15, 16) einen Widerhaken-ähnlichen Vorsprung (18) aufweist, der ausgebildet ist, um quer in den Schlitz vorzustehen, und der andere der gegenüberliegenden Wandbereiche ein Paar Rippen (21) aufweist, die ebenfalls ausgebildet sind, um quer in den Schlitz vorzustehen, und die sich jeweils an jeder Seite von dem Widerhaken-ähnlichen Vorsprung (18) befinden, wobei durch Einsetzen des Schenkels in den Schlitz der Schenkel um den Widerhaken-ähnlichen Vorsprung herum verformt wird, bis der Vorsprung in das Loch in dem Schenkel eines Etiketts eingreift, das ausreichend weit in den Schlitz gedrückt ist, wobei das Eingreifen anschließend durch die Rippen aufrechterhalten wird, so dass der Widerhaken ein Herausziehen des Schenkels aus dem Schlitz verhindert.

2. Behälter-Etikettierungssystem nach Anspruch 1, bei dem der Befestigungsschenkel Seitenkanten hat, die weg vom Hauptbereich des Etiketts in Richtung aufeinander zulaufen.

3. Behälter-Etikettierungssystem nach Anspruch 1 oder 2, bei dem das Loch durch den Etikettenschenkel eine allgemein rechteckige Form hat.

4. Behälter-Etikettierungssystem nach einem der vorhergehenden Ansprüche, bei dem der Behälter aus einem Kunststoffmaterial geformt und der Widerhaken-ähnliche Vorsprung integriert mit dem Behälter geformt ist.

5. Behälter-Etikettierungssystem nach einem der vorhergehenden Ansprüche, bei dem der Widerhaken-ähnliche Vorsprung direkt unter der Ebene der offenen Öffnung des Behälters geformt ist.

6. Behälter-Etikettierungssystem nach einem der vorhergehenden Ansprüche, bei dem der Schlitz eine allgemein lineare Form hat.

7. Behälter-Etikettierungssystem nach einem der Ansprüche 1 bis 5, bei dem der Schlitz gekrümmt ist und dem Krümmungsradius der Öffnung des Behälters folgt.

8. Behälter-Etikettierungssystem nach einem der vorhergehenden Ansprüche, bei dem der Widerhaken-ähnliche Vorsprung entlang der Länge des Schlitzes im wesentlichen mittig angeordnet ist.

9. Behälter-Etikettierungssystem nach einem der vorhergehenden Ansprüche, bei dem der Widerhaken-ähnliche Vorsprung mit einem Wandbereich des Behälters integriert und unmittelbar benachbart zu dessen Öffnung ausgebildet ist, um allgemein nach außen gerichtet quer in den Schlitz vorzustehen.

10. Behälter-Etikettierungssystem nach einem der vorhergehenden Ansprüche, bei dem eine sich nach unten erstreckende Lippe an dem freien Ende des Widerhaken-ähnlichen Vorsprungs vorgesehen ist, um ein Entfernen des Etiketts zu verhindern, wenn es mit dem Vorsprung in Eingriff steht.

11. Behälter-Etikettierungssystem nach einem der vorhergehenden Ansprüche, bei dem zumindest eine der Seitenkanten des Befestigungsschenkels des Etiketts benachbart zu dem Hauptbereich des Etiketts mit einer Abstufung versehen ist, wobei die Abstufung unter dem Randbereich des Behälters eingreifen kann, wenn das Etikett ausreichend tief in den Schlitz gedrückt ist.

12. Behälter zur Verwendung mit einem Behälter-Etikettierungssystem nach einem der Ansprüche 1 bis 11, wobei der Behälter eine Seitenwand aufweist, die eine Öffnung mit einem um diese herum verlaufenden Randbereich bildet, wobei der Randbereich ein Paar gegenüberliegende Wandbereiche aufweist, die einen Schlitz mit einem Widerhaken-ähnlichen Vorsprung, der von einem gegenüberliegenden Wandbereich quer in den Schlitz vorsteht, und einem Paar Rippen bilden, die von dem anderen Wandbereich quer in den Schlitz vorstehen, wobei die Rippen jeweils an jeder Seite des Widerhaken-ähnlichen Vorsprungs angeordnet sind, wodurch beim Drücken eines Etiketts, das einen mit Informationen versehenen Hauptbereich und einen von diesem Bereich vorstehenden flexiblen, planaren Befestigungsschenkel mit einem darin geformten Loch aufweist, die Rippen den Schenkel um den Widerhaken-ähnlichen Vorsprung herum verformen, bis der Vorsprung in das Loch eingreift, wonach der Eingriff durch die Rippen aufrechterhalten wird, um das Herausziehen des Schenkels aus dem Schlitz zu verhindern.

13. Behälter nach Anspruch 12, der die Gestalt von einem aus Kunststoffmaterial geformten Blumentopf hat.

14. Informations-Etikett zur Verwendung mit einem Behälter, der eine Öffnung mit einem um diesem herum verlaufenden Randbereich hat, wobei der Randbereich ein Paar gegenüberliegende Wandbereiche aufweist, die einen Schlitz mit einem Widerhaken-ähnlichen Vorsprung, der von einem gegenüberliegenden Wandbereich quer in den Schlitz vorsteht, und einem Paar Rippen bilden, die von dem anderen Wandbereich quer in den Schlitz vorstehen, wobei eine Rippe jeweils an jeder Seite des Widerhaken-ähnlichen Vorsprungs angeordnet ist, wobei das Etikett einen mit Informationen versehenen Hauptbereich, einen von diesem Bereich vorstehenden flexiblen, planarer Befestigungsschenkel und ein Loch aufweist, das durch den Befestigungsschenkel geformt ist, wodurch beim Drücken eines Etikettenschenkels in den Schlitz die Rippen den Schenkel um den Widerhaken-ähnlichen Vorsprung herum verformen, bis der Vorsprung in das Loch eingreift, wonach der Eingriff durch die Rippen aufrechterhalten wird, um das Herausziehen des Schenkels aus dem Schlitz zu verhindern.

15. Etikett nach Anspruch 14, bei der der Schenkel Seitenkanten hat, die weg vom Hauptbereich des Etiketts in Richtung aufeinander zulaufen.

16. Etikett nach Anspruch 15, bei dem zumindest eine der Seitenkanten von dem Schenkel des Etiketts mit einer Abstufung versehen ist, wobei die Abstufung unter dem Randbereich von einem Behälter eingreifen kann, wenn das Etikett ausreichend tief in den Schlitz von einem Behälter gedrückt ist.

17. Etikett nach einem der Ansprüche 14 bis 16, bei dem das Etikett aus einem Kunststoff-Bogenmaterial hergestellt ist.

## Revendications

1. Système d'étiquetage pour un container utilisable avec un pot (10) pour plantes, dans lequel l'étiquette est fabriquée dans un matériau flexible en feuille et sensiblement plan ayant une zone principale de support d'information (23) depuis laquelle s'étend une jambe de montage (24) au travers de laquelle une ouverture (27) est pratiquée, système dans lequel le container (10) a une bouche entourée d'une région de rive (14) ladite région de rive comprenant une fente allongée (17) définie par deux parties (15,16) opposées de la paroi du container pour recevoir la jambe de montage (24) de l'étiquette, l'une desdites parties (15,16) opposées de la paroi portant une extension (18) en forme de moustache formée pour s'étendre au travers de la fente, et l'autre desdites parties opposées de la paroi portant une paire de nervures (21) elles aussi formées pour s'étendre au travers de la fente, une de chaque côté de l'extension (18) en forme de moustache, de sorte que l'introduction de la jambe dans la fente déforme la jambe autour de l'extension en forme de moustache jusqu'à ce que ladite projection s'engage dans l'ouverture de la jambe d'une étiquette enfoncée suffisamment loin dans la fente, l'engagement étant ensuite conservé par les nervures, de sorte que la moustache résiste au retrait de la jambe de dedans la fente.

2. Système d'étiquetage pour un container selon la revendication 1, dans lequel la jambe de montage a des rives latérales se rapprochant en formant une pointe, à distance de la zone principale de l'étiquette.

3. Système d'étiquetage pour un container selon la revendication 1 ou 2, dans lequel l'ouverture à travers la jambe de l'étiquette a une forme générale rectangulaire.

4. Système d'étiquetage pour un container selon l'une quelconque des revendications précédentes, dans lequel le container comprend un moulage en matériau plastique et l'extension en forme de moustache est moulée d'une seule pièce avec le container.

5. Système d'étiquetage pour un container selon l'une quelconque des revendications précédentes, dans lequel l'extension en forme de moustache est positionnée immédiatement sous le niveau de la bouche ouverte du container.

6. Système d'étiquetage pour un container selon l'une quelconque des revendications précédentes, dans lequel la fente est d'une forme généralement linéaire.

7. Système d'étiquetage pour un container selon l'une quelconque des revendications 1 à 5, dans lequel la fente est arquée et suit le rayon de courbure de la bouche du container.

8. Système d'étiquetage pour un container selon l'une quelconque des revendications précédentes, dans lequel l'extension en forme de moustache est positionnée sensiblement à mi-longueur de la fente.

9. Système d'étiquetage pour un container selon l'une quelconque des revendications précédentes, dans lequel l'extension en forme de moustache est fabriquée d'une seule pièce avec la partie de la paroi du container immédiatement adjacente à la bouche, et de là s'étend généralement vers l'extérieur au travers de la fente.

10. Système d'étiquetage pour un container selon l'une quelconque des revendications précédentes, dans lequel une lèvre s'étend vers le bas depuis l'extrémité libre de l'extension en forme de moustache pour résister à l'enlèvement d'une étiquette une fois qu'elle est engagée avec la projection.

11. Système d'étiquetage pour un container selon l'une quelconque des revendications précédentes, dans lequel au moins un des bords latéraux de la jambe de montage de l'étiquette est pourvu d'un épaulement adjacent à la zone principale de l'étiquette, ledit épaulement pouvant être engagé au-dessous de la partie de rive du container, lorsque l'étiquette est enfoncée suffisamment loin dans la fente.

12. Container pour être utilisé dans un système d'étiquetage selon l'une quelconque des revendications 1 à 11, ledit container ayant une paroi latérale définissant une bouche entourée d'une région de rive, ladite région de rive ayant deux parties de paroi opposées définissant une fente ayant une extension en forme de moustache s'étendant au travers de la fente depuis l'une des parties opposées de la paroi et une paire de nervures s'étendant au travers de la fente depuis l'autre partie de la paroi et une des nervures étant disposée de chaque côté de l'extension en forme de moustache, de sorte qu'en poussant une étiquette comprenant une zone principale de support d'information, une jambe de montage plane et flexible s'étendant depuis ladite zone, une ouverture y étant ménagée, les nervures déforment la jambe autour de l'extension en forme de moustache jusqu'à ce que ladite extension s'engage dans l'ouverture, après quoi les nervures conservent l'engagement pour résister au retrait de la jambe de dedans la fente.

13. Container selon la revendication 12 ayant la forme d'un pot pour plantes moulé dans un matériau plastique.

14. Etiquette d'information pour être utilisée avec un container ayant une bouche entourée d'une région de rive, ladite région de rive ayant deux parties de paroi opposées définissant une fente, ladite fente ayant une extension en forme de moustache s'étendant au travers de la fente depuis l'une des parties opposées de la paroi et une paire de nervures s'étendant au travers de la fente depuis l'autre partie de la paroi et une des nervures étant disposée de chaque côté de l'extension en forme de moustache, ladite étiquette comprenant une zone principale de support d'information, une jambe de montage plane et flexible s'étendant depuis ladite zone l'introduction, une ouverture étant ménagée dans la jambe de montage de l'étiquette, de sorte qu'en poussant une jambe d'étiquette dans la fente, les nervures déforment la jambe autour de l'extension en forme de moustache jusqu'à ce que ladite extension s'engage dans l'ouverture, après quoi les nervures conservent l'engagement pour résister au retrait de la jambe de dedans la fente.

15. Etiquette selon la revendication 14, dans laquelle la jambe a des rives latérales se rapprochant en formant une pointe, à distance de la zone principale de l'étiquette.

16. Etiquette selon la revendication 14, dans laquelle un épaulement est formé dans au moins un des bords latéraux de la jambe de l'étiquette, ledit épaulement pouvant pénétrer derrière la partie de rive d'un container lorsque l'étiquette est insérée suffisamment loin dans la fente d'un container.

17. Etiquette selon l'une quelconque des revendications 14 à 16, dans laquelle l'étiquette est fabriquée à partir d'une feuille de matériau plastique.
